# EUROPÄISCHE PATENTSCHRIFT

(11) **EP 1 350 991 B1**
(45) Veröffentlichungstag und Bekanntmachung des Hinweises auf die Patenterteilung: **28.09.2005**
(21) Anmeldenummer: 02100293.6
(22) Anmeldetag: 26.03.2002
(51) Int. Cl.: F16H 63/18, F16H 59/68

(54) **Sensoranordnung zur Bestimmung der Schaltwalzenstellung**
Sensor arrangement for determining the position of a shift drum
Dispositif capteur pour déterminer la position d'un tambour sélecteur de vitesses

(43) Veröffentlichungstag der Anmeldung: 08.10.2003
(73) Patentinhaber: Getrag Ford Transmissions GmbH, 50725 Köln (DE)
(72) Erfinder: Hillebrand, Georg, 51503 Roesrath (DE); Bungart, Stephan, 42855 Remscheid (DE)
(74) Vertreter: Drömer, Hans-Carsten

(56) Entgegenhaltungen:
- EP-A- 0 806 591
- EP-A- 1 063 450
- EP-A- 1 094 253
- DE-A- 4 314 952
- DE-A- 19 507 621
- DE-A- 19 920 440
- DE-A- 19 929 632
- GB-A- 2 240 372

## Beschreibung

Die Erfindung bezieht sich auf eine Sensoranordnung zur Bestimmung der Schaltwalzenstellung einer Schaltwalze gemäß dem Oberbegriff des Patentanspruches 1.

Aus dem Stand der Technik sind verschiedene Sensoranordnungen zur Bestimmung der Schaltstellung insbesondere einer Getriebesteuerung bekannt. So ist z. B. aus der DE 199 29 632 A1 eine Vorrichtung zur Stellungserfassung von zwei Achsbewegungen, insbesondere der Schaltstellung einer Getriebesteuerung bekannt, bei der auf einer Welle mindestens eine Nockenbahn ausgebildet ist, an der ein Fortsatz eines Tasthebels entlang gleitet, wobei die Bewegung des Fortsatzes mit Hilfe eines Sensors in ein Ausgangssignal umgewandelt wird. Dabei befinden sich in Achsrichtung der Welle gesehen zu beiden Seiten einer ersten Nockenbahn mit kreisförmig verlaufender Oberfläche eine zweite und eine dritte Nockenbahn, wobei diese jeweils in Umfangsrichtung der Welle gesehen hintereinander Abschnitte mit unterschiedlicher Ausbildung aufweisen. Es wird dabei über ein Federelement ein Tasthebel auf die Mantelfläche des Nockens gedrückt, der eine kugelförmig ausgebildete Spitze aufweist. Über diesen Tasthebel werden nun während der Bewegung der Welle in axialer Richtung und in Drehrichtung diese beiden Bewegungen ständig vom Tasthebel mit dessen Spitze nachverfolgt und darüber die Schaltstellung ermittelt. Nachteilig ist hier, dass die Vorrichtung eine schwierig zu fertigende Geometriebahn aufweist, und, da die Welle auch eine Bewegung in axialer Richtung ausführt, dass der Tasthebel aufwendig gelagert werden muß. Die DE 199 29 632 A1 wird als nächstliegender Stand der Technik betrachtet.

Die EP 1 063 450 A1 offenbart ebenfalls eine Sensoranordnung, bei der ein Tasthebel auf einer Messfläche anliegt, die eine Steigung in Achsrichtung und in Drehrichtung einer Schaltwelle hat. Somit kann, analog zur DE 199 29 632 A1, mit Hilfe eines Tasthebels die axiale und radiale Position einer Welle bestimmt werden.

Die DE 195 07 621 offenbart einen Schalthebelbetätigungssensor, bei dem ein Sensor, beispielsweise wie der oben beschriebene Tasthebel, zusätzlich als Rastiervorrichtung verwendet wird.

Aus der DE 199 20 440 A1 ist weiterhin ein Stufengetriebe für ein Kraftfahrzeug mit einer Mehrzahl von Radsätzen entsprechend einer Mehrzahl von Gängen und mit einer drehbaren Schaltwalze bekannt, die wenigstens eine Umfangsnut aufweist, in der ein axial verschiebliches Führungselement geführt ist, das mit Mitteln zum Ein- und Auslegen von wenigstens einem der Gänge gekoppelt ist. Es ist dabei eine weitere drehbare Schaltwalze vorgesehen, die wenigstens eine weitere Umfangsnut aufweist, in der ein weiteres axial verschiebliches Führungselement geführt ist, das mit Mitteln zum Ein- bzw. Auslegen von wenigstens einem anderen der Gänge gekoppelt ist. Bei dieser Anordnung kann die Steuerung bzw. Betätigung für die Schaltwalzen unterschiedliche Ausgestaltung aufweisen. So können dabei z.B. Kurvenscheiben vorgesehen sein, die mit den Schaltwalzen kraft- oder formschlüssig verbunden oder einstückig hiermit ausgeführt sind. Dabei kann der Umfang der Kurvenscheiben in Winkelbereichen, die den Schaltstellungen von einem der Gänge entsprechen, mit einem größeren Radius versehen sein als in den Winkelbereichen entsprechend den neutralen Schaltstellungen; es umfassen also dabei die Kurvenscheiben radial vorstehende Winkelbereiche, die den Schaltstellungen der Gänge entsprechen, und radial zurückversetzte Winkelbereiche, die den neutralen Schaltstellungen entsprechen. Bei dieser Anordnung ist ebenfalls die sehr genaue und variable Steuerung bzw. Betätigung der jeweiligen Schaltstellung von Vorteil, nachteilig ist jedoch hier, daß diese Vorrichtung nicht zuläßt, allein aus der Stellung der Kurvenscheibe die Schaltstellung zu bestimmen. Aus der EP 10 094 253 A2 ist eine Schaltungsanordnung mit einer Steuereinrichtung bekannt, bei der die verschiedenen Wellenstellungen der Ein- und Ausgangswellen eines Übertragungsgetriebes mittels verschiedener Sensorelemente erfaßt werden, die ihrerseits über eine elektronische Steuerung weiterverarbeitet werden. Die Ausführung der Anordnung dient dabei insbesondere zur Gewichtsreduzierung und zur Erhöhung der Zuverlässigkeit.

Aus der DE 43 14 952 A1 ist schließlich eine Vorrichtung zur Erfassung der Gangstellung eines Schaltgetriebes bekannt, dessen Getriebestufen mittels einer sowohl um ihre Achse drehbar als auch in Richtung ihrer Achse verschiebbar in einem Gehäuse des Schaltgetriebes gelagerten Schaltwelle schaltbar sind unter Verwendung von digitalen Schaltelementen. Es ist dabei eine Kombination von digitalen und analogen Schaltelementen vorgesehen, derart, daß für die Erfassung der Gassen digitale und für die Erfassung der Gänge analoge Schaltelemente vorgesehen sind. Es kann dabei das analoge Schaltelement unterschiedliche Ausbildungen aufweisen, es kann z.B. als Drehwinkelsensor oder auch als Wegsensor ausgebildet sein.

Ausgehend von diesen bekannten Sensoranordnungen zur Bestimmung der Schaltstellung insbesondere einer Getriebesteuerung liegt der Erfindung die Aufgabe zugrunde, eine Sensoranordnung zu entwickeln, die einen einfacheren Aufbau als die bekannten Sensoranordnungen aufweist.

Die Aufgabe wird erfindungsgemäß durch die Merkmale des Anspruchs 1 gelöst.

Auf diese Weise wird erstmalig mit einfachen Mitteln die Möglichkeit geschaffen, daß die Sensorscheibe nicht nur die einzelnen Schaltstellungen, d.h. die Gangstellungen G, die Neutralstellungen N und eine beliebige Referenzneutralstufe nN als Rastpunkt erkennt, sondern daß insbesondere auch gleichzeitig die Bereiche zwischen den Schaltabschnitten NG und GN aufgrund der Sensorstellung und der Drehrichtung erkannt wird, ob die nächste Schaltstellung Neutral oder ein Gang ist. Die kombinierte Erfassung der Positionsdaten über eine einzige Sensorscheibe, ohne axiale Verschiebung von Abtasteinrichtung oder Sensorscheibe, führt zu einer erheblichen Vereinfachung der Herstellung der Sensoranordnung bzw. ermöglicht es, einfachere Sensorelemente zu verwenden. Die Anordnung ermöglicht dabei trotzdem eine den Anforderungen vollkommen genügende Bestimmung der Schaltstellung und damit Kontrolle der Schaltwalze.

In einer vorteilhaften Ausgestaltung der Erfindung weist die Ablaufbahn an zumindest einer Gangstellung oder Neutralstellung eine Rastnut auf und die Abtasteinrichtung wird mittels geeigneter Element auf die Ablaufbahn gedrückt. Damit wird die Funktionalität der Sensoranordnung von Sensorscheibe und Abtastsystem um die Funktion eines mechanisiertes Rastsystem, wie es z. B. aus Handschaltgetrieben bekannt ist, erweitert. Der mit der Ablaufbahn zusammenwirkende Abtastkopf bewerkstelligt durch den Andruck der Abtasteinrichtung auf die Ablaufbahn die Rastung in den Schaltstellungen Gang oder Neutral.

In einer weiteren erfinderischen Ausführung weist die Ablaufbahn im Bereich eines Schaltungsabschnittes veränderliche Positionsdaten auf. Dies kann z. B. bedeuten, daß der Schaltungsabschnitt rampenförmig bezüglich der zu messenden Positionsdaten ausgeführt ist, wodurch den Positionsdaten eine eindeutige Stellung der Sensorscheibe zugeordnet werden kann. Dabei können einzelne Schaltungsabschnitte die jeweils gleichen veränderlichen Positionsdaten aufweisen, oder aber, jeder Schaltungsabschnitt weist eigene, singuläre Positionsdaten auf. Auch ist jede Kombination möglich, z. B. kann ein Teil der Schaltungsabschnitte einen gleichen Verlauf der Positionsdaten aufweisen, ein anderer Teil einen anderen Verlauf der Positionsdaten.

Vorteilhaft weist die Ablaufbahn unterschiedliche Positionsdaten zwischen den Schaltstellungen von Gangstellungen und den Schaltstellungen von Neutralstellungen auf. Damit ist sofort erkennbar, ob ein Gang eingelegt ist oder ob sich das Getriebe in Neutral befindet.

Weiterhin kann die Ablaufbahn unterschiedliche Positionsdaten zumindest für einzelne Gangstellungen aufweisen. Damit lässt sich aus den Positionsdaten sofort der eingelegte Gang bestimmen.

Weiterhin kann die Ablaufbahn unterschiedliche Positionsdaten zumindest für einzelne Neutralstellungen aufweisen. Damit lässt sich aus den Positionsdaten sofort bestimmen, zwischen welchen Gängen sich die Schaltwalze in Neutral befindet. Insbesondere für eine Referenzneutral ist dies erforderlich. Es gibt eine Referenzneutralstellung, z. B. zwischen einem Vorwärtsgang und einem Rückwärtsgang, die eigene Positionsdaten aufweist, und die somit sofort erkannt werden kann. Ein Anwendung dafür ist die Neutralstellung des Getriebes, z. B. beim Anlassen eines Motors, wenn noch keine Schaltung erfolgte. Aus dieser Position heraus erfolgen dann die erste Schaltung.

In einer bevorzugten Ausführung weist die Sensorscheibe zur Erzeugung unterschiedlicher Positionsdaten in radialer Richtung unterschiedliche Durchmesser entlang ihrer Laufbahn auf. Dies entspricht einer im Umfang der Sensorscheibe angeordneten Laufbahn, die überwiegend in radialer Richtung von der Abtasteinrichtung abgetastet wird. Die Umfangsänderungen werden als Positionsdaten registriert und können entsprechend der Sensorscheibenstellung zugeordnet werden.

In einer weiteren Ausführung weist die Sensorscheibe zur Erzeugung unterschiedlicher Positionsdaten in axialer Richtung eine Laufbahn auf, die, in axialer Richtung der Sensorscheibenachse gesehen, nicht eben ist. Dies entspricht einer Anordnung der Abtasteinrichtung in axialer Richtung, d. h. das Abtastsystem erfasst an der Stirnseite der Sensorscheibe die axiale Unebenheit und ordnet diese Positionsdaten einer Sensorscheibenstellung zu. Natürlich ist auch eine Kombination von axialer Positionsdatenbestimmung und radialer Positionsdatenbestimmung, wie im vorherigen Absatz beschrieben, möglich. Sinnvollerweise kommen dann jedoch mindestens zwei Abtasteinrichtungen zum Einsatz.

In einer weiteren bevorzugten Ausführung weist die Abtasteinrichtung zur Abtastung der Ablaufbahn der Sensorscheibe eine drehbar gelagerte Kugel auf. Die Kugel als Abtastkopf verringert die Reibung zwischen Abtasteinrichtung und Ablaufbahn, was vor allem bei der Verwendung der Sensoranordnung als Rastsystem eine sichere Schaltung und genaue Messung im Bereich der Rastnuten ermöglicht. Prinzipiell aber kann die Abtasteinrichtung jeden bekannten Abtastkopf zum Abtasten von Oberflächen aufweisen, ist also nicht auf eine Kugel als Abtastkopf beschränkt.

Bevorzugt weist die Abtasteinrichtung einen als Hall- Element ausgebildeten Sensor auf. Dadurch kann aus der Bewegung der Abtasteinrichtung, welche aus der Änderung der Positionsdaten resultiert, sehr genau die relative Verschiebung und damit die Positionsdaten bestimmt werden. Bei dem als Hall-Element ausgeführten Sensor wird vorwiegend eine lineare Verschiebung der Abtasteinrichtung gemessen. Es versteht sich von selbst, das auch jede andere Verschiebung oder Verdrehung der Abtasteinrichtung zur Bestimmung der Positionsdaten herangezogen und mittels geeigneter Sensoren erfasst werden kann.

Weitere vorteilhafte Ausgestaltungen der Erfindung sind den Zeichnungen zu entnehmen. Es zeigen:
- Fig. 1: eine Seitenansicht einer ersten Ausführungsform der erfindungsgemäßen Sensoranordnung im Schnitt,
- Fig. 2: eine Querschnittsansicht der ersten Ausführungsform der erfindungsgemäßen Sensoranordnung,
- Fig. 3: eine Querschnittsansicht einer zweiten Ausführungsform der erfindungsgemäßen Sensoranordnung,

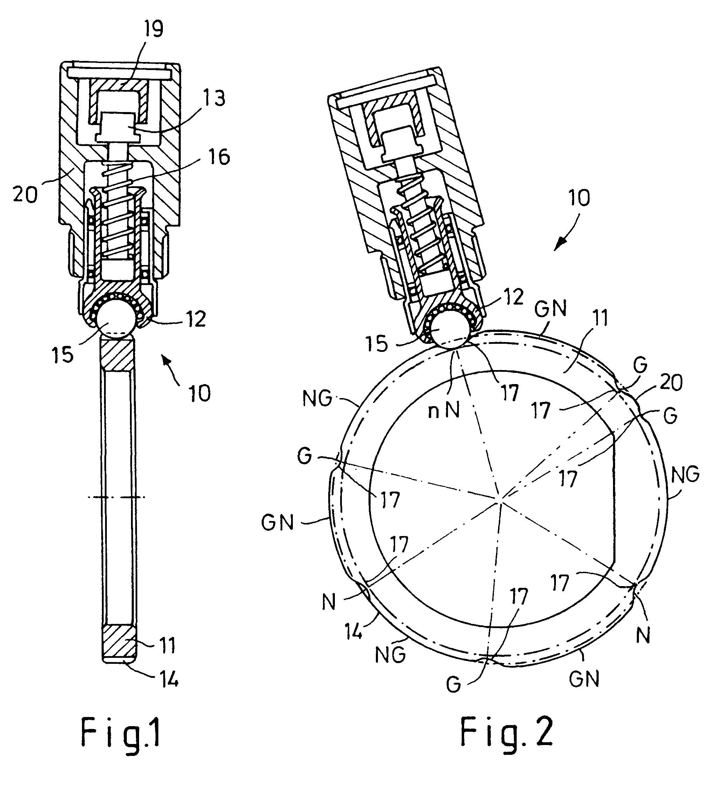

In Figur 1 ist eine erfindungsgemäße Sensoranordnung 10 dargestellt. Die Sensoranordnung 10 weist eine mit der Schaltwalze in Wirkverbindung stehende Sensorscheibe 11 mit der Ablaufbahn 14 auf. Die Sensoranordnung 10 weist weiterhin eine die Ablaufbahn 14 der Sensorscheibe 11 kontinuierlich abgreifende, federbelastete Abtasteinrichtung 12 auf, wobei eine drehbar gelagerte Kugel 15 direkt auf der Ablaufbahn 14 abläuft.

Die Abtasteinrichtung 12 ist in einem fest am nicht dargestellten Getriebe befestigten Abtastgehäuse 20 verschiebbar gelagert, wobei die Bewegungsrichtung überwiegend in radialer Richtung der Sensorscheibe 11 orientiert ist. Die Feder 16, die auf einer Seite im Abtastgehäuse 20 gelagert ist, drückt mit ihrer anderen Seite die Abtasteinrichtung 12 und damit die Kugel 15 auf die Ablaufbahn 14. Am der Kugel 5 entgegengesetzten Ende ist auf der Abtasteinrichtung ein Magnet 13 angeordnet, der Teil des Hall-Element ausgebildeten Sensors 19 ist. Der Sensor 19 erfaßt die Positionsdaten der Abtasteinrichtung 12 und wandelt diese in ein elektrisches Signal um.

In Figur 2 ist die Querschnittsansicht der erfindungsgemäßen Sensoranordnung gezeigt. Entlang der Ablaufbahn 14 ist die Sensorscheibe 11 zur kombinierten Erfassung von auf Schaltungsabschnitte GN, NG der Schaltwalze bezogene Positionsdaten und von auf präzise Schaltstellungen G, N, nN der Schaltwalze bezogene Positionsdaten ausgebildet. Hierbei bedeuten:
- N:: Neutralstellung, Schaltstellung, bei der sich das Getriebe in Neutral befindet;
- nN:: Referenzneutralstellung, eine bestimmte, einmalige Schaltstellung, bei der sich das Getriebe in Neutral befindet, als Referenz benutzt, bevorzugt zwischen einem Vorwärtsgangstellung und einer Rückwärtsgangstellung angeordnet;
- G:: Gangstellung, Schaltstellung bei der ein Gang im Getriebe eingelegt ist, z. B. Rückwärtsgang, 1. 2. oder 3. Gang usw.;
- NG:: Schaltungsabschnitt zwischen einer Neutralstellung N und einer Schaltstellung G, wobei die Neutralstellung N nur in eine erste Drehrichtung der Schaltwalze erreicht wird, die Gangstellung G dagegen in eine zweite, entgegengesetzte Drehrichtung;
- GN:: Schaltungsabschnitt zwischen einer Neutralstellung N und einer Schaltstellung G, wobei - entgegengesetzt zu NG - die Neutralstellung N nur in die zweite Drehrichtung der Schaltwalze erreicht wird, und die Gangstellung G dagegen in die erste, entgegengesetzte Drehrichtung.

Die Sensorscheibe 11 weist zur kombinierten Erfassung der unterschiedlichen Positionsdaten zwischen den Schaltabschnitten NG und GN unterschiedliche Durchmesser auf. Die Schaltstellungen G, N und nN, die als Schaltnuten ausgeführt sind, weisen ebenfalls jeweils unterschiedliche Durchmesser auf, die sich ebenfalls von den Durchmessern der Schaltabschnitte NG und GN unterscheiden. Durch Auswertung des Stellungssignals des Sensors 19 wird die augenblickliche Stellung der Sensorscheibe 11 erkannt. Weiterhin kann aus dem Stellungssignal abgeleitet werden, ob in Drehrichtung eine Neutralstellung oder eine Gangstellung folgt, da, abhängig von NG oder GN, in Drehrichtung nur G oder N bzw. nN als nächste Schaltstellung folgen können. Umgekehrt kann auch aufgrund der Auswertung bei der Bewegung aus einer Schaltstellung G, N oder nN die Drehrichtung der Schaltwalze ermittelt werden, da bei einer Drehrichtung aus G z. B. immer NG, aus N dann aber GN folgen muß.

Im Bereich 20 der Abtastbahn 14 liegt weder ein Schaltungsabschnitt GN noch NG vor. Der Bereich 20 wird im Betrieb praktisch nicht durchfahren, da die Schaltwalze in diesem Beispiel nur eine Drehung von kleiner 360° ausführt. Die beiden dem Bereich 20 benachbarten Gangstellungen G stellen damit jeweils die beiden Endstellungen der Schaltwalzendrehung dar.

Bei einer weiteren Ausgestaltung der Erfindung weisen die Raststellungen von G bzw. von N auch untereinander unterschiedliche Durchmesser auf, so daß auch z. B. die 1. Gangstufe, die 3. Gangstufe, Neutral zwischen 1. und 2. Gang usw. direkt erkannt werden können.

Die Sensorscheibe 11 weist im Bereich der Rastnuten an den Gangstellungen G und den Neutralstellungen N einen radial zurückversetzten, entgegengesetzt kreisbogenförmigen Teilbereich 17 auf. Dadurch werden die einzelnen Schaltstellungen G, N auf der Sensorscheibe 11 genau festgelegt, was für die Messung der Positionsdaten mit hoher Präzision in den einzelnen Schaltstellungen G, N von Bedeutung ist, da die mit der Sensorscheibe in Verbindung stehende Schaltwalze durch das federbelastete Abtasteinrichtung 12 mittels der Kugel 15 mechanisch in Stellung gehalten und gerastet wird. Somit wird eine sichere, reproduzierbare Rastung in den Schaltstellungen erzielt.

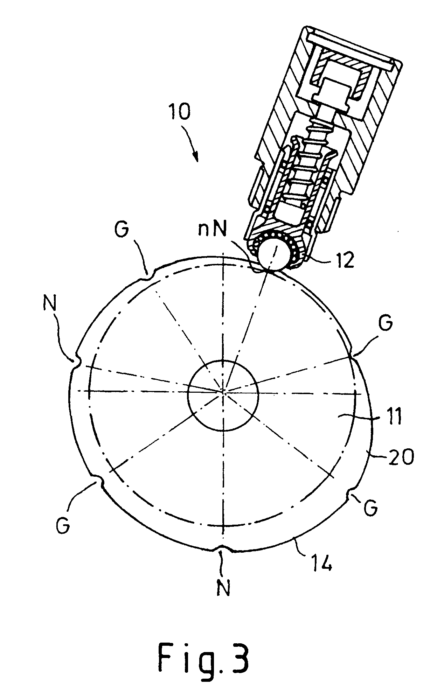

In Figur 3 ist eine ähnliche Sensoranordnung 10 wie in Figur 1 dargestellt. Lediglich die Sensorscheibe 11 unterscheidet sich bezüglich der Durchmesser an der Ablaufbahn 14: In den Bereichen zwischen nN, N und G weist die Ablaufbahn 14 veränderbare, rampenförmig verlaufende Durchmesser auf, wobei die radiale Änderung des Durchmessers einem bestimmten Winkel der Schaltwalze zugeordnet werden kann. Die einzelnen Rastpunkte an den Gangstellungen G und N können ebenfalls singulären Durchmessern zugeordnet werden. Somit kann die Zuordnung zu bestimmten Gangstellungen G, z. B. Rückwärts-, 1.-, 2.- oder 3.-Gang und verschiedenen dazwischenliegenden Neutralpositionen erreicht werden. Auch hier wird der Bereich 20, wie bereits in Figur 2 beschrieben, im praktischen Betrieb nicht durchfahren, somit werden die dortigen Positionsdaten nicht gebraucht.

Wie bereits erwähnt, sind die dargestellten Ausführungsformen nur beispielsweise Verwirklichungen der Erfindung. Die Erfindung ist nicht auf die gezeigten Beispiele beschränkt, es sind vielmehr noch weitere Abänderungen und Ausbildungen möglich. So sind insbesondere Abwandlungen der Sensorscheibe 11 zur kombinierten Erfassung unterschiedlichen Positionsdaten in radialer und axialer Richtung denkbar.

## Patentansprüche

1. Sensoranordnung (10) zur Bestimmung der Schaltwalzenstellung einer Schaltwalze insbesondere einer Getriebesteuerung, mit einer mit der Schaltwalze in Wirkverbindung stehenden, mittels einer Ablaufbahn (14) unterschiedliche Schaltzustände kennzeichnenden Sensorscheibe (11), und einer die Ablaufbahn (14) kontinuierlich abgreifenden Abtasteinrichtung (12) zur Erfassung der die Schaltzustände kennzeichnenden Positionsdaten der Ablaufbahn (14),
**dadurch gekennzeichnet, daß**
- die Ablaufbahn (14) zumindest teilweise Bereiche für Gangstellungen (G), Neutralstellungen (N) und Schaltungsabschnitte (GN, NG) aufweist,
- wobei ein Schaltungsabschnitt (GN, NG) jeweils zwischen einer Gangstellung (G) und einer Neutralstellung (N) angeordnet ist, so dass zwei Schaltungsabschnitte (GN, NG) einer Gangstellung (G) oder einer Neutralstellung (N) direkt benachbart sind,
- und wobei die von der Abtasteinrichtung (12) zu erfassenden Positionsdaten von Gangstellungen (G) und Neutralstellungen (N) von den Positionsdaten der Schaltungsabschnitte (GN, NG) unterschiedlich sind,
- und die Positionsdaten der Schaltungsabschnitte (GN, NG), die einer Gangstellung (G) oder einer Neutralstellung (N) direkt benachbart sind, untereinander unterschiedlich sind.

2. Sensoranordnung nach Anspruch 1,
**dadurch gekennzeichnet, daß**
die Ablaufbahn (14) an zumindest einer Gangstellung (G) oder Neutralstellung (N) eine Rastnut (17) aufweist, und die Abtasteinrichtung (12) mittels geeigneter Element auf die Ablaufbahn gedrückt wird.

3. Sensoranordnung nach Anspruch 1 oder 2,
**dadurch gekennzeichnet, daß**
die Ablaufbahn (14) im Bereich eines Schaltungsabschnittes (GN, NG) veränderliche Positionsdaten aufweist.

4. Sensoranordnung nach einem der vorherigen Ansprüche,
**dadurch gekennzeichnet, daß**
die Ablaufbahn (14) unterschiedliche Positionsdaten zwischen den Schaltstellungen von Gangstellungen (G) und den Schaltstellungen von Neutralstellungen (N) aufweist.

5. Sensoranordnung nach einem der vorherigen Ansprüche,
**dadurch gekennzeichnet, daß**
die Ablaufbahn (14) unterschiedliche Positionsdaten zumindest für einzelne Gangstellungen (G) aufweist.

6. Sensoranordnung nach einem der vorherigen Ansprüche,,
**dadurch gekennzeichnet, daß**
die Ablaufbahn (14) unterschiedliche Positionsdaten zumindest für einzelne Neutralstellungen (N, nN) aufweist.

7. Sensoranordnung nach einem der vorherigen Ansprüche,
**dadurch gekennzeichnet, daß**
die Sensorscheibe (11) zur Erzeugung unterschiedlicher Positionsdaten in radialer Richtung unterschiedliche Durchmesser entlang ihrer Laufbahn (14) aufweist.

8. Sensoranordnung nach einem der vorherigen Ansprüche,
**dadurch gekennzeichnet, daß**
die Sensorscheibe (11) zur Erzeugung unterschiedlicher Positionsdaten in axialer Richtung eine Laufbahn (14) aufweist, die, in axialer Richtung der Sensorscheibenachse gesehen, nicht eben ist.

9. Sensoranordnung nach einem der vorherigen Ansprüche,
**dadurch gekennzeichnet, daß**
die Abtasteinrichtung (12) zur Abtastung der Ablaufbahn (14) der Sensorscheibe (2) eine drehbar gelagerte Kugel (15) aufweist.

10. Sensoranordnung nach einem der vorherigen Ansprüche,
**dadurch gekennzeichnet, daß**
die Abtasteinrichtung (12) einen als Hall- Element ausgebildeten Sensor (19) aufweist.

## Claims

1. Sensor arrangement (10) for determining the selector drum position of a selector drum, in particular of a transmission controller, having a sensor disc (11) that is operatively connected to the selector drum and identifies different selector states by means of a running track (14), and a sensing device (12) that continuously senses the running track (14) in order to register the position data from the running track (14) which identifies the switching states, **characterized in that**
- the running track (14) has, at least to some extent, regions for gear positions (G), neutral positions (N) and selector sections (GN, NG),
- a selector section (GN, NG) in each case being arranged between a gear position (G) and a neutral position (N), so that two selector sections (GN, NG) of a gear position (G) or of a neutral position (N) are directly adjacent,
- and the position data to be registered by the sensing device (12) and belonging to gear positions (G) and neutral positions (N) being different from the position data belonging to the selector sections (GN, NG),
- and the position data of the selector sections (GN, NG) which are directly adjacent to a gear position (G) or a neutral position (N) being different from one another.

2. Sensor arrangement according to Claim 1, **characterized in that** the running track (14) has a detent groove (17) at at least one gear position (G) or neutral position (N), and the sensing device (12) is pressed onto the running track by means of a suitable element.

3. Sensor arrangement according to Claim 1 or 2, **characterized in that** the running track (14) has variable position data in the region of a selector section (GN, NG).

4. Sensor arrangement according to one of the preceding claims, **characterized in that** the running track (14) has different position data between the selector positions of gear positions (G) and the selector positions of neutral positions (N).

5. Sensor arrangement according to one of the preceding claims, **characterized in that** the running track (14) has different position data at least for individual gear positions (G).

6. Sensor arrangement according to one of the preceding claims, **characterized in that** the running track (14) has different position data at least for individual neutral positions (N, nN).

7. Sensor arrangement according to one of the preceding claims, **characterized in that** the sensor disc (11) has different diameters along its running track (14) in order to produce different position data in the radial direction.

8. Sensor arrangement according to one of the preceding claims, **characterized in that** the sensor disc (11) has a running track (14) which, as viewed in the axial direction of the sensor disc axis, is not flat, in order to produce different position data in the axial direction.

9. Sensor arrangement according to one of the preceding claims, **characterized in that** the sensing device (12) has a rotatably mounted ball (15) in order to sense the running track (14) of the sensor disc (11).

10. Sensor arrangement according to one of the preceding claims, **characterized in that** the sensing device (12) has a sensor (19) designed as a Hall element.

## Revendications

1. Dispositif capteur (10) pour déterminer la position de tambour sélecteur de vitesse d'un tambour sélecteur de vitesse notamment d'une commande de boîte de vitesses, comprenant un disque de capteur (11) en liaison coopérante avec le tambour sélecteur de vitesse, caractérisant différents états de sélection au moyen d'une piste de roulement (14), et avec un dispositif de détection (12) venant en prise en continu avec la piste de roulement (14) pour la détection des données de position de la piste de roulement (14) caractérisant les états de sélection,
**caractérisé en ce que**
- la piste de roulement (14) présente au moins des zones partielles pour les positions engagées (G), les positions neutres (N) et les segments de sélection (GN, NG),
- un segment de sélection (GN, NG) étant disposé à chaque fois entre une position engagée (G) et une position neutre (N), de sorte que deux segments de sélection (GN, NG) soient directement adjacents à une position engagée (G) ou à une position neutre (N),
- et les données de position des positions engagées (G) et des positions neutres (N) à détecter par le dispositif de détection (12) étant différentes des données de position des segments de sélection (GN, NG),
- et les données de position des segments de sélection (GN, NG) qui sont directement adjacents à une position engagée (G) ou à une position neutre (N), étant différentes les unes des autres.

2. Dispositif capteur selon la revendication 1,
**caractérisé en ce que**
la piste de roulement (14) présente une rainure d'encliquetage (17) au niveau d'au moins une position engagée (G) ou une position neutre (N), et le dispositif de détection (12) étant pressé au moyen d'un élément approprié contre la piste de roulement.

3. Dispositif capteur selon la revendication 1 ou 2,
**caractérisé en ce que**
la piste de roulement (14) présente des données de position variables dans la région d'un segment de sélection (GN, NG).

4. Dispositif capteur selon l'une quelconque des revendications précédentes,
**caractérisé en ce que**
la piste de roulement (14) présente des données de position différentes entre les positions de sélection de positions engagées (G) et les positions de sélection de positions neutres (N).

5. Dispositif capteur selon l'une quelconque des revendications précédentes,
**caractérisé en ce que**
la piste de roulement (14) présente différentes données de position au moins pour des positions engagées (G) individuelles.

6. Dispositif capteur selon l'une quelconque des revendications précédentes,
**caractérisé en ce que**
la piste de roulement (14) présente différentes données de position au moins pour des positions neutres (N, nN) individuelles.

7. Dispositif capteur selon l'une quelconque des revendications précédentes,
**caractérisé en ce que**
le disque de capteur (11) pour la production de données de position différentes présente des diamètres différents dans la direction radiale le long de sa piste de roulement (14).

8. Dispositif capteur selon l'une quelconque des revendications précédentes,
**caractérisé en ce que**
le disque de capteur (11) pour la production de données de position différentes présente dans la direction axiale une piste de roulement (14) qui n'est pas plane, vue dans la direction axiale de l'axe du disque de capteur.

9. Dispositif capteur selon l'une quelconque des revendications précédentes,
**caractérisé en ce que**
le dispositif de détection (12) pour la détection de la piste de roulement (14) du disque de capteur (11) présente une bille (15) montée à rotation.

10. Dispositif capteur selon l'une quelconque des revendications précédentes,
**caractérisé en ce que**
le dispositif de détection (12) présente un capteur (19) réalisé sous forme d'élément de Hall.
